(19) **Europäisches Patentamt**
**European Patent Office**
**Office européen des brevets**

(11) **EP 2 450 668 B1**

(12) **EUROPEAN PATENT SPECIFICATION**

(45) Date of publication and mention
of the grant of the patent:
**15.01.2014 Bulletin 2014/03**

(51) Int Cl.:
**G01C 22/02** (2006.01)      **G05D 1/02** (2006.01)
**G01C 21/28** (2006.01)

(21) Application number: **10405212.1**

(22) Date of filing: **04.11.2010**

(54) **A method for tracking the position and the heading of a vehicle using dead reckoning and a tracking device for carrying out the method**

Verfahren zur Positions- und Fahrtrichtungsverfolgung eines Fahrzeugs mittels Koppelnavigation und Verfolgungsvorrichtung zum Durchführen des Verfahrens

Procédé pour poursuivre la position et le cap d'un véhicule utilisant la navigation à estime et dispositif de poursuite pour la réalisation du procédé

(84) Designated Contracting States:
**AL AT BE BG CY CZ DE DK EE ES FI FR GB GR HR HU IE IS IT LT LU LV MC MK MT NL NO PL PT RO RS SE SI SK SM TR**

(43) Date of publication of application:
**09.05.2012 Bulletin 2012/19**

(73) Proprietor: **u-blox AG**
**8800 Thalwil (CH)**

(72) Inventor: **Hollenstein, Christine**
**9248 Bichwil (CH)**

(74) Representative: **Wagner, Wolfgang Heribert et al**
**Wagner Patent AG**
**Apollostrasse 2**
**Postfach 1021**
**8032 Zürich (CH)**

(56) References cited:
**EP-A1- 0 360 934      WO-A1-84/01823**
**US-A- 5 477 220**

- **CH.HOLLENSTEIN,E.FAVEY,C.SCHMID, A.SOMIESKI ,D.AMMANN: "Performance of a Low-cost Real-time Navigation System using Single-frequency GNSS Measurements Combined with Wheel-tick Data", PROCEEDINGS OF THE 21ST INTERNATIONAL TECHNICAL MEETING OF THE SATELLITE DIVISION OF THE INSTITUTE OF NAVIGATION (ION GNSS 2008), 16 September 2008 (2008-09-16), - 19 September 2008 (2008-09-19), pages 1610-1618, XP002632335, Savannah, GA**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

**Field of the invention**

The invention concerns a method for keeping track of the position and the heading of a vehicle using tracking by dead reckoning. Such methods are used in cars and other vehicles, often complementing determination of the vehicle position by GNSS, in particular, where GNSS signals are temporarily too weak or unavailable, e.g., in tunnels, car parkings and the like. The invention also concerns a tracking device for carrying out the method.

**Prior art**

Methods for tracking the position and heading of a vehicle by dead reckoning using rear wheel velocities derived from sensor measurements are well known. Although the evaluation of front wheel velocities is more complicated due to the variability of the wheel angles methods using only front wheel velocities have also been proposed. So far only approximate solutions connecting the velocity and heading rate of the vehicle to left and right front wheel velocities have been employed, s., e.g.: Ch. Hollenstein, E. Favey, C. Schmid, A. Somieski, D. Ammann: 'Performance of a Low-cost Real-time Navigation System using Single-frequency GNSS Measurements Combined with Wheel-tick Data', Proceedings of ION GNSS 2008 Meeting, Savannah, September 2008. According to this paper, the wheel angle was determined by iterative methods. The approximations used can compromise the precision of the tracking where large wheel angles cannot be excluded.

**Summary of the invention**

It is the object of the invention to provide a method for keeping track of the position and heading of a vehicle according to the generic part of claim 1 which provides improved precision. This object is achieved by the features in the characterising portion of claim 1.

The advantages of the method according to the invention are particularly pronounced where large wheel angles occur, e.g., in underground car parkings and similar environments where, at the same time, GNSS signals tend to be weak or absent. The method can be implemented in ways which are very economical as to processing power and memory requirements.

The sensor measurements can be used in combination with GNSS measurements where such are available, e.g., by feeding both to a tightly coupled Kalman filter.

It is another object of the invention to provide a tracking device suitable for carrying out the method according to the invention.

**Brief description of the drawings**

In the following the invention is described in more detail with reference to drawings which only illustrate an examplary embodiment.

Fig. 1    schematically shows a vehicle comprising a tracking device according to the invention and whose position and heading is being tracked using the method according to the invention,

Fig. 2    shows a flow diagram of the method according to the invention,

Fig. 3    shows a part of the flow diagram of Fig. 2 in more detail, and

Fig. 4    shows a diagram with an approximate solution and an exact solution for an intermediate wheel angle $\delta$ as shown in Fig. 1.

**Description of the preferred embodiments**

In vehicles so-called 'dead reckoning' is often used for tracking the position of the vehicle by determining the velocities of the wheels and using the results as a basis for updating the vehicle position, either in combination with GNSS or, where GNSS is not available, by itself. Dead reckoning and GNSS tracking calculations can be carried out in an appropriate tracking device, usually a component of the vehicle or attached to the same, and the results displayed or made use of in other ways.

A wheel velocity is normally determined from sensor measurements, usually signals known as 'wheel ticks' which are produced at particular rotational positions separated by fixed angular increments. Where sensor measurements from the rear wheels are used, deriving the speed and heading rate of the vehicle is usually straightforward as wheel angles may be assumed to be constant and equal to zero.

In some cases, however, sensor measurements from rear wheels are not available and speed and heading rate must be derived from front wheel sensor measurements alone. This requires more involved calculations as the variable wheel angles which need to be taken into account must be derived from the wheel ticks as well unless they are available otherwise, e.g., from direct measurements.

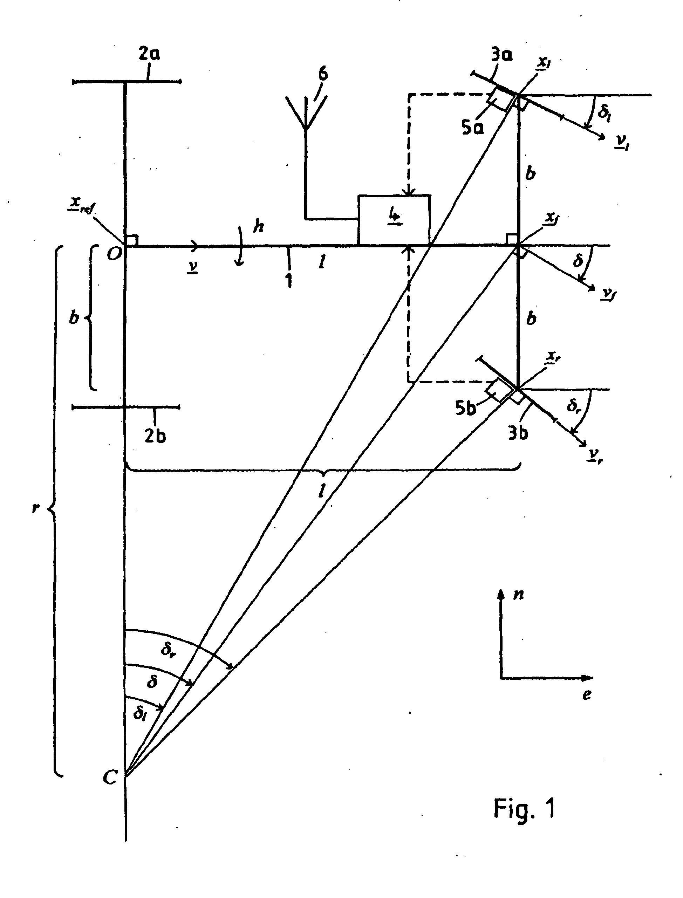

In the following the case where wheel angles must be derived solely from front wheel sensor measurements is described in detail. It is assumed that the vehicle (Fig. 1) comprises a rigid frame 1 on which rear wheels 2a,b and front wheels 3a,b are mounted. The vehicle is steerable in that the front wheels 3a,b are rotatable about vertical axes passing through their centres and may assume wheel angles covering an interval containing 0° which value corresponds to a motion of the vehicle straight ahead. A tracking installation comprises a tracking device 4 which is fixed to the frame 1 and wheel tick units 5a,b monitoring the rotations of the front wheels 3a;b or other sensors producing sensor measurements from which the wheel velocities of the front wheels 3a,b can be derived. A GNSS antenna 6 which is also mounted on the frame 1, feeds, like the wheel tick units 5a,b, data to the tracking device 4. The tracking device 4 is configured to process the sensor measurements, i.e., signals from the wheel tick units 5a,b, in order to extract a position and a heading of the vehicle from them as well as GNSS signals received by the GNSS antenna 6 and contains the components for storing and processing data and outputting results etc. which are required for the purpose. It is assumed that the frame 1 and the suspensions of the rear wheels 2a,b and the front wheels 3a,b are symmetrical with respect to an axis of symmetry which passes through the midpoints between the rear wheels 2a,b and the front wheels 3a,b.

In the following derivations it is assumed that there is no slippage and that the momentary motion of the wheel centre follows in each case the direction implied by the wheel angle and, for simplicity, that the vehicle moves in a level plane defined by a northerly direction ($n$) and an easterly direction ($e$). Every vector $\underline{x}$ in the plane therefore consists of a northerly component and an easterly component, that is, $\underline{x}=(x^{(n)}, x^{(e)})$. If the plane the vehicle moves on is inclined it is straightforward to project its motion onto a level plane.

In the example the state of the vehicle can be described by the position of a reference point $\underline{x}_{ref}=(x_{ref}^{(n)},x_{ref}^{(e)})$ fixed on the frame 1 of the vehicle and the heading $H$, i.e., the angle between the northerly direction and the longitudinal direction of the said frame, where the angle is measured clockwise.

In dead reckoning tracking of the vehicle position, a new state assumed by the vehicle at the end of a $(k+1)^{th}$ time update interval of length $\Delta t$ can be derived from the state at the end of the previous time update interval using equations of motion

$$(1) \quad x_{ref,k+1}^{(n)} = x_{ref,k}^{(n)} + v \cos\left(H_k + \frac{h\Delta t}{2}\right)\Delta t$$

$$(2) \quad x_{ref,k+1}^{(e)} = x_{ref,k}^{(e)} + v \sin\left(H_k + \frac{h\Delta t}{2}\right)\Delta t$$

$$(3) \quad H_{k+1} = H_k + h\Delta t$$

where $v$ is the momentary scalar velocity and $h$ the momentary heading rate, i.e., the angular velocity of the vehicle. For every time update step the scalar velocity $v$ and the heading rate $h$ must therefore be determined from the velocities $v_l$ and $v_r$ of the left and right front wheels. They correspond to raw velocities $T_l$, $T_r$ derived from numbers of wheel ticks registered during the time interval $\Delta t$ according to

$$(4a) \quad v_l = f_l\, T_l$$

$$(4b) \quad v_r = f_r T_r$$

with wheel tick calibration factors $f_l$ and $f_r$ which depend on the wheel radii.

For simplicity it is (Fig. 1) assumed in the following that the vehicle is at the moment oriented in an easterly direction, i.e., that its heading $H$ equals 90°, and that the reference point $\underline{x}_{ref}$ of the vehicle, defined as the midpoint between the centres of the rear wheels, is at the origin $O$. Thereby the below derivations can be carried out in a simple manner in the fixed coordinate system described above. As the results do not depend on the orientation of the vehicle and its position on the plane this does not imply a loss of generality.

According to the above assumptions,

$$(5) \quad \underline{x}_{ref} = (0, 0)$$

and the midpoint between the centres of the front wheels is at

$$(6) \quad \underline{x}_f = (0, l)$$

where $l$ is the wheel base of the vehicle and the centres of the front wheels are at

$$(7a) \quad \underline{x}_l = (b, l)$$

$$(7b) \quad \underline{x}_r = (-b, l)$$

with $b$ equalling one half of the front track gauge.

The vehicle, that is, its reference point $\underline{x}_{ref}$, moves at the moment with a velocity $v$ in an easterly direction:

$$(8) \quad \underline{v} = (0, v).$$

The corresponding velocities of the other relevant points $\underline{x}_f$, $\underline{x}_l$, $\underline{x}_r$ are

$$(9) \quad \underline{v}_f = (-v_f \sin\delta, v_f \cos\delta)$$

and

$$(10a) \quad \underline{v}_l = (-v_l \sin\delta_l, v_l \cos\delta_l)$$

$$(10b) \quad \underline{v}_r = (-v_r \sin\delta_r, v_r \cos\delta_r)$$

where $v_f$, $v_l$ and $v_r$ each designate a scalar velocity, i.e., the length of the respective vector and $\delta_l$, $\delta_r$ are the wheel angles of the left and the right front wheel, respectively, whereas an intermediate wheel angle $\delta$ is the angle between the easterly direction and the momentary direction of motion of $\underline{x}_f$.

Defining

$$(11) \qquad a = \frac{b}{l},$$

with

$$(12) \qquad \tan\delta = \frac{l}{r}$$

where $r$ is the distance between $\underline{x}_{ref}$ and the momentary centre of rotation of the vehicle $C$ at $(-r,0)$ and $\tan\delta_l = \dfrac{l}{r+b}$

one gets $\dfrac{l}{\tan\delta_l} = \dfrac{1+a\tan\delta}{\tan\delta}$ and finally

$$(13a) \qquad \tan\delta_l = \frac{\tan\delta}{1+a\tan\delta}.$$

Similarly, from

$$\tan\delta_r = \frac{l}{r-b}$$

one has

$$(13b) \qquad \tan\delta_r = \frac{\tan\delta}{1-a\tan\delta}.$$

From the rigidity of the vehicle it follows that

$$(14) \qquad \frac{d}{dt}\left\|\underline{x}_f - \underline{x}_{ref}\right\|^2 = 2\left\langle \underline{x}_f - \underline{x}_{ref}, \underline{v}_f - \underline{v} \right\rangle = 0$$

and together with (5), (6), (8) and (9) that $l(v_f \cos\delta - v) = 0$ and

$$(15) \quad v_f = \frac{v}{\cos\delta}$$

and finally with (9)

$$(16) \quad \underline{v}_f = (-v\tan\delta, v).$$

Using the same method for $\underline{x}_l$, $\underline{x}_r$ yields

$$(17a) \quad v_l = \frac{v}{\cos\delta_l(1-a\tan\delta_l)}$$

$$(17b) \quad v_r = \frac{v}{\cos\delta_r(1+a\tan\delta_r)}$$

and

$$(18a) \quad \underline{v}_l = \frac{v}{1-a\tan\delta_l}(-\tan\delta_l, 1)$$

$$(18b) \quad \underline{v}_r = \frac{v}{1+a\tan\delta_r}(-\tan\delta_r, 1)$$

and with (13a) and (13b), respectively, because of

$$\frac{1}{1-a\tan\delta_l} = \frac{1}{1-\dfrac{a\tan\delta}{1+a\tan\delta}} = 1+a\tan\delta \quad \text{and} \quad \frac{1}{1+a\tan\delta_r} = \frac{1}{1+\dfrac{a\tan\delta}{1-a\tan\delta}} = 1-a\tan\delta$$

$$(19a) \quad \underline{v}_l = v(-\tan\delta, 1+a\tan\delta)$$

$$(19b) \quad \underline{v}_r = v(-\tan\delta, 1-a\tan\delta)$$

and

$$(20a) \quad v_l = v\sqrt{1+2a\tan\delta+(1+a^2)\tan^2\delta}$$

$$(20b) \quad v_r = v\sqrt{1 - 2a\tan\delta + (1+a^2)\tan^2\delta} \, .$$

The scalar heading rate is

$$(21) \quad |h| = \frac{\left\lVert (v_f - v)_{\perp} \right\rVert}{l} = \frac{\left| v_f^{(n)} - v^{(n)} \right|}{l}$$

where the subscript $\perp$ signifies the component of the vector which is perpendicular to the longitudinal axis of the vehicle, which leads to

$$(22) \quad h = \frac{v\tan\delta}{l}$$

where it is assumed that a heading rate in the clockwise direction carries the plus sign.

Defining $V_+$ and $V_-$ as

$$(23) \quad V_+ = v_l^2 + v_r^2$$

and

$$(24) \quad V_- = v_l^2 - v_r^2$$

one gets from (20a) and (20b)

$$(25) \quad V_+ = 2v^2[1 + (1+a^2)\tan^2\delta]$$

and

$$(26) \quad V_- = 4av^2\tan\delta$$

or

$$(27) \quad \tan\delta = \frac{V_-}{4av^2}$$

and $V_+ = 2v^2\left[1 + (1+a^2)\dfrac{V_-^2}{16a^2v^4}\right] = 2v^2 + (1+a^2)\dfrac{V_-^2}{8a^2v^2}$ and finally

$$(28) \qquad v^4 - \frac{V_+}{2} v^2 + \frac{(1+a^2)V_-^2}{16a^2} = 0.$$

This quadratic equation for $v^2$ has a solution

$$(29) \qquad v^2 = \frac{1}{4}\left( V_+ \pm \sqrt{V_+^2 - \frac{1+a^2}{a^2}V_-^2} \right)$$

with two branches, one with a plus-sign and one with a minus sign in front of the square root.

With

$$(30) \qquad P = \frac{V_-}{V_+}$$

(29) becomes

$$(31) \qquad v^2 = \frac{V_+}{4}\left( 1 \pm \sqrt{1 - P^2 - \left(\frac{P}{a}\right)^2} \right)$$

and for $v$ one gets accordingly

$$(32) \qquad v = \pm \frac{1}{2}\sqrt{V_+\left( 1 \pm \sqrt{1 - P^2 - \left(\frac{P}{a}\right)^2} \right)},$$

where positive $v$ signifies forward motion and negative $v$ backward motion of the vehicle. (27) and (31) lead, together with (30), to exact solutions of equations (20a), (20b) for the tangent of the wheel angle $\delta$ and the said wheel angle itself:

$$(33) \qquad \tan\delta_{ex} = \frac{\dfrac{P}{a}}{1 \pm \sqrt{1 - P^2 - \left(\dfrac{P}{a}\right)^2}},$$

$$(34) \qquad \delta_{ex} = \arctan\left( \frac{\dfrac{P}{a}}{1 \pm \sqrt{1 - P^2 - \left(\dfrac{P}{a}\right)^2}} \right).$$

(33) can be inverted and $P$ represented as a function of $y = \tan\delta_{ex}$:

$$(35) \quad P(y) = \frac{2ay}{1+(1+a^2)y^2} \; .$$

This antisymmetric function has extrema at

$$(36a) \quad y_{max} = \frac{1}{\sqrt{1+a^2}} \; ,$$

$$(36b) \quad y_{min} = -\frac{1}{\sqrt{1+a^2}}$$

where

$$(37a) \quad P_{max} = P(y_{max}) = \frac{a}{\sqrt{1+a^2}} \; ,$$

$$(37b) \quad P_{min} = P(y_{min}) = -\frac{a}{\sqrt{1+a^2}} \; .$$

These are the values of $P$ where the argument of the square root in (31) is zero and $\delta_{ex}$ assumes the values

$$(38a) \quad \delta_{ex}(P_{max}) = \arctan\left(\frac{1}{\sqrt{1+a^2}}\right) ,$$

$$(38b) \quad \delta_{ex}(P_{min}) = -\arctan\left(\frac{1}{\sqrt{1+a^2}}\right) .$$

The branch of the solution (31) which corresponds to a range for $\delta_{ex}$ containing 0 - motion of the vehicle straight ahead - is the first branch where the square root in (31) and consequently in (33), (34) is preceded by a plus sign and which applies for $0 \leq |\delta_{ex}| \leq \delta_{lim}$ with $\delta_{lim} = \delta_{ex}(P_{max})$ whereas the second branch, with a minus sign in front of the square root, covers $\delta_{lim} \leq \delta_{ex} \leq 90°$. This implies that if $|\delta_{ex}|$ may assume values larger than $\delta_{lim}$ the solution is not everywhere unique as there are subranges of $\delta_{ex}$ surrounding $\delta_{lim}$ and $-\delta_{lim}$ where two solutions exist and it is not possible to pick the correct one on the basis of the momentary wheel velocities alone. However, for $\delta_{ex} = \delta_{lim}$ we have, by (13b),

$$(39) \quad \delta_r = \delta_{wlim} = \arctan\left(\frac{1}{\sqrt{1+a^2}-a}\right)$$

and as long as the wheel angle of the right front wheel $\delta_r$ is, e.g., by mechanical constraints, limited by $\delta_r \leq \delta_{wlim}$ - and,

by symmetry - the wheel angle of the left front wheel $\delta_l$ by $\delta_l \geq -\delta_{wlim}$ - the solution is unique as only the first branch in (31) and (33), (34) can apply. As $\delta_{wlim}$ is always larger than 45° and with most vehicles the wheel angles are limited to values smaller than that the limitation $0 \leq |\delta_{ex}| \leq \delta_{lim}$ will be assumed to hold in the following.

With this assumption (31) to (34) can be restated as

$$(40) \quad v^2 = \frac{V_+}{4}\left(1 + \sqrt{1 - P^2 - \left(\frac{P}{a}\right)^2}\right),$$

$$(41) \quad v = \pm \tfrac{1}{2}\sqrt{V_+\left(1 + \sqrt{1 - P^2 - \left(\frac{P}{a}\right)^2}\right)},$$

$$(42) \quad \tan\delta_{ex} = \frac{\dfrac{P}{a}}{1 + \sqrt{1 - P^2 - \left(\dfrac{P}{a}\right)^2}}$$

and

$$(43) \quad \delta_{ex} = \arctan\left(\frac{\dfrac{P}{a}}{1 + \sqrt{1 - P^2 - \left(\dfrac{P}{a}\right)^2}}\right).$$

The heading rate h can then be derived from (22), (41) and (42) as

$$(44) \quad h = \pm \frac{\sqrt{V_+}}{2b}\frac{P}{\sqrt{1 + \sqrt{1 - P^2 - \left(\dfrac{P}{a}\right)^2}}}.$$

The exact solutions derived above for $v$, $\delta$ and $h$ are rather complicated and, in particular, lead to unwieldy expressions for the derivatives which are needed where the dependence of $v$ and $h$ upon the scalar wheel velocities $v_l$ and $v_r$ are used in a Kalman filter or a least squares or similar evaluation. Working with them in real time situations where processing power and time are limited is therefore often not practicable. There are, however, more tractable approximations which are usually good enough, at least as long as the wheel angles are not too large. For large wheel angles the said approximations can then be appropriately corrected.

A relatively simple approximate solution which is well known per se from geometrical considerations can be developed starting with (20a) and (20b). (20a) can be rewritten as

$$(45) \qquad v_l = v \sqrt{\frac{1}{\cos^2 \delta} + 2a \tan \delta + a^2 \tan^2 \delta}.$$

The square root can then be expanded, i.e., linearised, about $\dfrac{1}{\cos^2 \delta}$ which yields

$$(46) \qquad v_l = \frac{v}{\cos \delta} + v \cos \delta \, a \tan \delta + O((a \tan \delta)^2).$$

Disregarding the higher order terms, one arrives at

$$(47a) \qquad v_l = \frac{v_{app}}{\cos \delta_{app}} + a v_{app} \sin \delta_{app}$$

$$(47b) \qquad v_r = \frac{v_{app}}{\cos \delta_{app}} - a v_{app} \sin \delta_{app}$$

where the suffix *app* signifies 'approximate' and $v_r$ has been derived in a manner entirely analogous to the derivation of $v_l$ above.

From (47a), (47b) follow

$$(48) \qquad v_l + v_r = \frac{2 v_{app}}{\cos \delta_{app}}$$

and

$$(49) \qquad v_l - v_r = 2 a v_{app} \sin \delta_{app}.$$

Defining

$$(50) \qquad p = \frac{v_l - v_r}{v_l + v_r}$$

one has

$$(51) \qquad p = a\,\sin\delta_{app}\cos\delta_{app} = \frac{a}{2}\sin2\delta_{app}$$

or

$$(52) \qquad \delta_{app} = \tfrac{1}{2}\arcsin\frac{2p}{a} = \tfrac{1}{2}\arcsin\frac{2l(v_l - v_r)}{b(v_l + v_r)}\ .$$

With $\delta_{app}$ one can now extract from (48) the approximate solution

$$(53) \qquad v_{app} = \frac{v_l + v_r}{2}\cos\delta_{app}$$

and, with (22), from (49)

$$(54) \qquad h_{app} = \frac{v_l - v_r}{2b\cos\delta_{app}}\ .$$

Using (22) one can rewrite equations (47a), (47b) as

$$(55a) \qquad v_l = \frac{v_{app}}{\cos\delta_{app}} + bh_{app}\cos\delta_{app}$$

$$(55b) \qquad v_r = \frac{v_{app}}{\cos\delta_{app}} - bh_{app}\cos\delta_{app}$$

whence (53) and (54) can also be easily derived.

This approximate solution is usually good enough as long as the wheel angles are not too large, i.e., $\delta_{app} < \delta_{thr}$, where $\delta_{thr}$ is a threshold wheel angle which depends on the geometry of the vehicle and the precision requirements and will usually be between 30° and 40°. Where $\delta_{app}$ is larger than $\delta_{thr}$, in particular, if $\delta_{app}$ approaches 45°, the approximate solution tends to deviate significantly, yielding often unsatisfactory results. However, it has been found that the approximation can be improved to an extent which makes it adequate for most practical purposes by replacing $\delta_{app}$ by $\delta_{ex}$ for large values of $\delta_{app}$ in (53) and (54). This yields results intermediate between the exact results according to (41), (44) and the approximate results according to (53), (54) above which are, however quite close to the former even for large wheel angles:

$$(56) \qquad v_{im} = \frac{v_l + v_r}{2}\cos\delta_{ex}$$

$$(57) \qquad h_{im} = \frac{v_l - v_r}{2b\cos\delta_{ex}}\ .$$

The approximate and intermediate results for the velocity $v$ and the heading rate $h$ differ only by the choice made for a calculation wheel angle $\delta_{cal}$ used in the calculations which in the first case equals $\delta_{app}$ and in the second $\delta_{ex}$.

$\delta_{ex}$ can be calculated directly from $\delta_{app}$ as follows:

With

$$(58) \quad P = \frac{v_l^2 - v_r^2}{v_l^2 + v_r^2} = \frac{(v_l + v_r)(v_l - v_r)}{\frac{1}{2}\left[(v_l + v_r)^2 + (v_l - v_r)^2\right]}$$

one gets

$$\frac{1}{P} = \frac{1}{2}\left(\frac{v_l + v_r}{v_l - v_r} + \frac{v_l - v_r}{v_l + v_r}\right) = \frac{1}{2}\left(\frac{1}{p} + p\right) = \frac{1 + p^2}{2p},$$

i.e.,

$$(59) \quad P = \frac{2p}{1 + p^2}$$

which, together with (42), leads to

$$(60) \quad \tan\delta_{ex} = \frac{\dfrac{2p}{a}}{1 + p^2 + \sqrt{\left(1 - p^2\right)^2 - \left(\dfrac{2p}{a}\right)^2}}$$

and

$$(61) \quad \delta_{ex} = \arctan\left(\frac{\dfrac{2p}{a}}{1 + p^2 + \sqrt{\left(1 - p^2\right)^2 - \left(\dfrac{2p}{a}\right)^2}}\right).$$

Taken together with (51), (61) yields $\delta_{ex}$ as a function of $\delta_{app}$.

The reverse, i.e., calculation of $\delta_{app}$ as a function of $\delta_{ex}$, is equally possible. From (20a), (20b) follows

$$(62) \quad p = \frac{\sqrt{1 + 2a\tan\delta_{ex} + (1+a^2)\tan^2\delta_{ex}} - \sqrt{1 - 2a\tan\delta_{ex} + (1+a^2)\tan^2\delta_{ex}}}{\sqrt{1 + 2a\tan\delta_{ex} + (1+a^2)\tan^2\delta_{ex}} + \sqrt{1 - 2a\tan\delta_{ex} + (1+a^2)\tan^2\delta_{ex}}}$$

and this can be used, together with (52), to calculate $\delta_{app}$ from $\delta_{ex}$. In any case, only the fixed parameter a which depends on the geometry of the vehicle enters into the calculations.

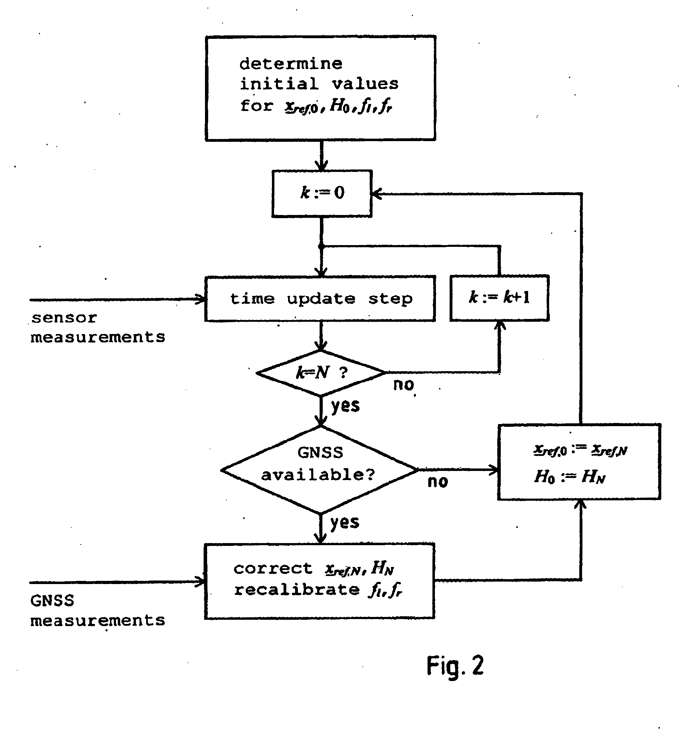

The method according to the invention can be best understood considering Fig. 2 which provides an overview. For tracking the position of the vehicle, consecutive filter cycles are carried out in the tracking device 4, each covering a cycle interval. A complete filter cycle of the tightly coupled Kalman filter which is preferably used comprises a prediction step and, where GNSS measurements are available, a correction step which also takes those measurements into account. The use of a Kalman filter makes it possible to deal adequately with the random influences which usually affect measurements.

A prediction step consists of N time update steps each covering a measuring interval $\Delta t$ of, e.g., 0.1s, with N being, e.g., 10, and consequently covers a cycle interval $N\Delta t$ which, in the example, has a duration of 1s. At the beginning of a prediction step the state vector of the vehicle is set to the values determined at the end of the previous cycle interval, or, at the beginning of the process, to some initial values, which provides a starting point comprising starting values $\underline{x}_{ref,0}$, $H_0$ for the position and the heading as well as values for the wheel tick calibration factors $f_l$, $f_r$.

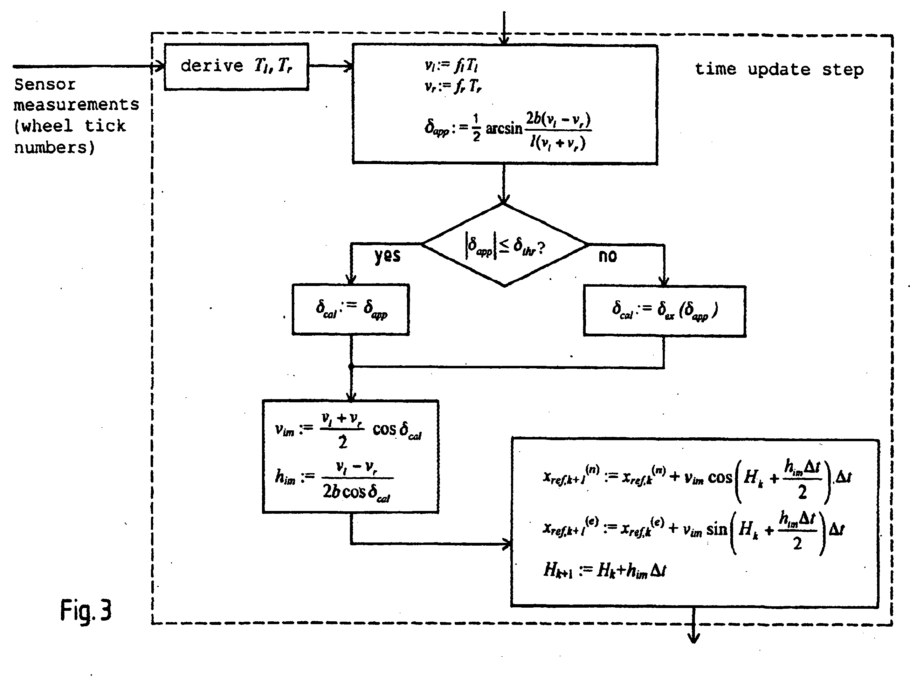

During a time update step the following actions are carried out (s. Fig. 3) in the tracking device 4:

A raw velocity $T_l$ of the left front wheel 3a and a raw velocitiy $T_r$ of the right front wheel 3b are derived from the wheel tick numbers as registered by the wheel tick units 5a;b for each of the N time update intervals, the numbers being low pass filtered for smoothing out random variations.

Wheel velocities $v_l$, $v_r$ are calculated from the raw wheel velocities $T_l$, $T_r$ assigned to the first measurement interval and from the wheel tick calibration factors $f_l$, $f_r$ which are assumed to be constant throughout the cycle interval using equations (4a), (4b), and new values for the position $\underline{x}_{ref,1}$ and heading $H_1$ are determined where equations (1) - (3) with $k=0$ are used with the calculation wheel angle $\delta_{cal}$ having been determined first from the wheel velocities $v_l$, $v_r$ and used to calculate a velocity $v$ and a heading rate $h$.

$k$ is then (Fig. 2) replaced by $k+1$ and the process repeated with the end position from the previous measurement interval used as a starting point in each case until $k=N$ when the process is terminated after the calculation of a new state. In this way the trajectory covered by the vehicle during the cycle interval is approximated by a sequence of N linear sections each corresponding to a time update step. The calculation wheel angle $\delta_{cal}$ is assumed to be a constant at every time update step but the covariance matrix is modified to add process noise accounting for the random factors which in fact influence the value of the said angle used in the calculation.

The result of the prediction step, i.e., of the $N^{th}$ update step, consisting of state and accuracy information, is, where GNSS measurements are available, then used in a correction step of the tightly coupled Kalman filter which also processes the said GNSS measurements. The filter cycle is finalised and a new state vector determined which comprises a corrected position $\underline{x}_{ref,N}$ and heading $H_N$ to be used as a starting point $\underline{x}_{ref,0}$ $H_0$ in the first time update step of the prediction step in the next filter cycle as well as recalibrated wheel tick calibration factors $f_l$, $f_r$. The position and heading are output by the tracking device 4 for display or other purposes, e.g., for use in processing in a navigation device.

Use of equations (1)-(3) above requires that for every time update interval values for $v$ and $h$ are calculated previously which in turn requires determining the calculation wheel angle $\delta_{cal}$ such that $v$ and $h$ can then be calculated as

$$(63) \quad v_{im} = \frac{v_l + v_r}{2} \cos\delta_{cal}$$

$$(64) \quad h_{im} = \frac{v_l - v_r}{2b\cos\delta_{cal}}$$

within a wheel angle interval to which the wheel angle $\delta$ is limited and which is usually symmetric about 0°, i.e., equals $[-\delta_{max}, +\delta_{max}]$ where $\delta_{max}$ is some constant depending on mechanical properties of the vehicle and can, e.g., be somewhere between 35° and 42°. In any case it is assumed that $\delta_{max}$ is not greater than $\delta_{lim}$.

For the purpose of calculating $v$ and $h$ equation (52) is used in each case to determine $\delta_{app}$ first. Where $\delta_{app}$

is not too large, e.g., $|\delta_{app}|\leq\delta_{thr}$ where $\delta_{thr}$ is a threshold fixed in such a way that for $|\delta_{app}|\leq\delta_{thr}$ $\delta_{app}$ is within a tolerance range surrounding $\delta_{ex}$, $\delta_{cal}$ is set equal to $\delta_{app}$. The tolerance range is determined by the consideration that any angle within the same is close enough to $\delta_{ex}$ to insure that the error introduced by using it instead of $\delta_{ex}$ is not significant. In the portion of the wheel angle interval where $\delta_{app}$ is not within the said tolerance range, in the example in the area defined by $|\delta_{app}|>\delta_{thr}$, an approximation to $\delta_{ex}$ must be used which deviates less from the same than $\delta_{app}$, preferably a value for $\delta_{cal}$ which is virtually equal to $\delta_{ex}$. That is, $\delta_{cal}$ can be determined according to

$$(65) \quad \delta_{cal} = \begin{cases} \delta_{app} & \text{for } |\delta_{app}| \leq \delta_{thr} \\ \delta_{ex} & \text{for } |\delta_{app}| > \delta_{thr}. \end{cases}$$

The value of $\delta_{cal}$ from (65) can then be used in (63), (64). The tolerance range about $\delta_{ex}$ can be defined, for instance, by a certain amount or percentage of acceptable deviation, e.g., deviation by not more than 2°, preferably by not more than 1°. Other criteria, e.g., a maximum acceptable deviation of the velocity $v$ or the heading rate $h$ or both, in absolute or relative terms, are also possible.

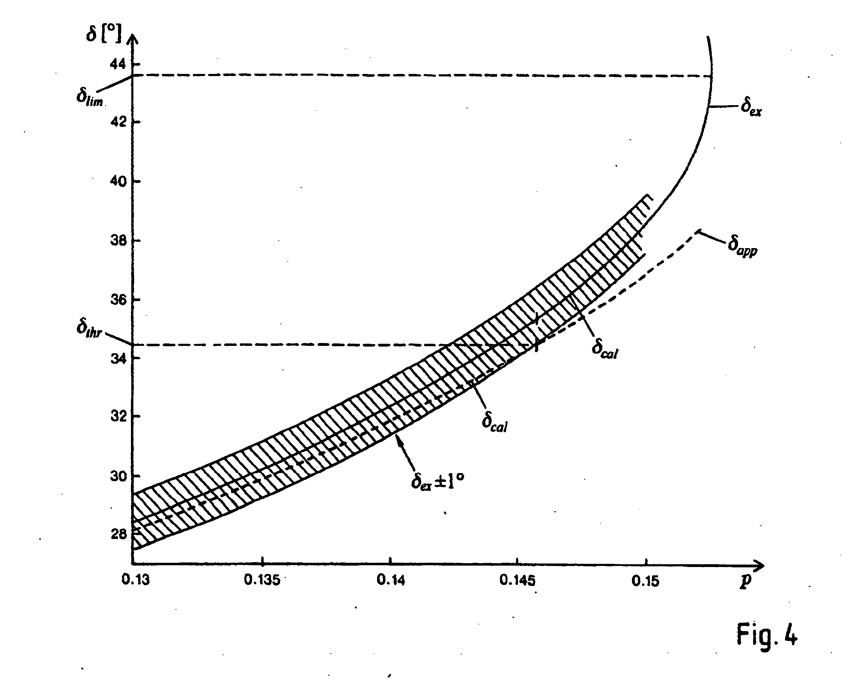

Fig. 4 shows the situation for $a=0.31$ with an acceptable deviation of $\pm1°$. Where $\delta_{app}$ is within the tolerance range of $\delta_{ex}\pm1°$ $\delta_{cal}$ is set equal to $\delta_{app}$. At $\delta_{app}=\delta_{thr}$ where $\delta_{app}$ reaches the boundary of the tolerance range, $\delta_{cal}$ is switched to $\delta_{ex}$.

The most convenient way to replace $\delta_{app}$ by a closer approximation to $\delta_{ex}$ if $|\delta_{app}|>\delta_{thr}$ is to use a look-up table which, for each one of a row of appropriately spaced values of $\delta_{ex}$, contains a corresponding value for $\delta_{app}$ such that the values of $\delta_{app}$ cover an interval bounded below by $\delta_{thr}$ and above by the value of $\delta_{app}$ which correponds to $\delta_{ex}$ when the latter is equal to $\delta_{max}$. An appropriate table can be calculated once for all for a given vehicle using formulae (52) and (62) and permanently stored. For any value of $\delta_{app}$ with $|\delta_{app}|>\delta_{thr}$ the corresponding value of $\delta_{ex}$ can then be determined by, e.g., linear, interpolation between neighbouring values read from the table. This method does not require much processing power in the tracking device 4 and memory requirements are also modest.

It is also possible, however, to use a function of the $\delta$ 's whose values differ from $\delta$ itself, i.e., a function which differs from the identical function.

E.g., from (51) an expression for $\tan\delta_{app}$ can be derived. Expressing $p$ as

$$(66) \quad p = \frac{a \tan \delta_{app}}{1 + \tan^2 \delta_{app}}$$

leads to a quadratic equation for $\tan\delta_{app}$ with the solution

$$(67) \quad \tan\delta_{app} = \frac{1 - \sqrt{1 - \left(\frac{2p}{a}\right)^2}}{\frac{2p}{a}}$$

which yields, together with (62), $\tan\delta_{app}$ as a function of $\tan\delta_{ex}$. In a neighbourhood of zero where this function of $p$ is indefinite it can be replaced by the linear approximation

$$(68) \quad \tan\delta_{app} = \frac{p}{a}.$$

Again, $\tan\delta_{ex}$ can vice versa be expressed as a function of $\tan\delta_{app}$ inserting $p$ from (66) into (60). These relations can be used to calulate and permanently store a look-up table containing values for $\tan\delta_{ex}$ as a function of $\tan\delta_{app}$.

A $\tan\delta_{cal}$ can then be used in the calculations which is defined as

$$(69) \quad \tan\delta_{cal} = \begin{cases} \tan\delta_{app} & \text{for } |\delta_{app}| \leq \delta_{thr} \\ \tan\delta_{ex} & \text{for } |\delta_{app}| > \delta_{thr} \end{cases}$$

or equivalently

$$(70) \quad \tan\delta_{cal} = \begin{cases} \tan\delta_{app} & \text{for } |\tan\delta_{app}| \leq \tan\delta_{thr} \\ \tan\delta_{ex} & \text{for } |\tan\delta_{app}| > \tan\delta_{thr}. \end{cases}$$

$\cos\delta_{cal}$ can then be expressed as a function of $\tan\delta_{cal}$, as

$$(71) \quad \cos\delta_{cal} = \frac{1}{\sqrt{1 + \tan^2\delta_{cal}}},$$

for calculating $v_{im}$ and $h_{im}$ according to (63) and (64), respectively.

Where (63) and (64) are used it is, however, more convenient to work directly with the cosine. An expression for $\cos\delta_{app}$ can be derived from (51) as follows:

$$(72) \quad p = a\sqrt{1 - \cos^2\delta_{app}} \; \cos\delta_{app}$$

leads to a quadratic equation for $\cos^2\delta_{app}$

$$(73) \quad \cos^4\delta_{app} - \cos^2\delta_{app} + \left(\frac{p}{a}\right)^2 = 0$$

with the solution

$$(74) \quad \cos\delta_{app} = \sqrt{\frac{1 + \sqrt{1 - \left(\frac{2p}{a}\right)^2}}{2}}.$$

for the cosine. Here again, $\cos\delta_{ex}$ can be expressed as a function of $\cos\delta_{app}$, e.g., via the tangent

with $\tan\delta_{app} = \dfrac{\sqrt{1-\cos^2\delta_{app}}}{\cos\delta_{app}}$ and $\cos\delta_{ex} = \dfrac{1}{\sqrt{1+\tan^2\delta_{ex}}}$ and vice versa. This

can be used to prepare a look-up table with corresponding pairs of $\cos\delta_{app}$ and $\cos\delta_{ex}$ from which $\cos\delta_{cal}$ can be easily determined for $|\delta_{app}|>\delta_{thr}$ or, equivalently, $|\cos\delta_{app}|<\cos\delta_{thr}$.

A somewhat different $v_{im}$ can be calculated from $\tan\delta_{ex}$ using

$$(75) \qquad v_{im} = \pm \tfrac{1}{2}\sqrt{\frac{V_{+}\frac{P}{a}}{\tan\delta_{ex}}} = \pm \frac{1}{\sqrt{2a}}\sqrt{\frac{V_{+}p}{(1+p^2)\tan\delta_{ex}}}$$

or equivalently

$$(76) \qquad v_{im} = \pm \frac{1}{2\sqrt{a}}\sqrt{\frac{V_{-}}{\tan\delta_{ex}}} = \pm \frac{1}{2\sqrt{a}}\sqrt{\frac{v_l^2-v_r^2}{\tan\delta_{ex}}} = \pm \frac{1}{2\sqrt{a}}\sqrt{\frac{(v_l+v_r)(v_l-v_r)}{\tan\delta_{ex}}}$$

which can be easily derived from (41), (42) and yields the exact solution of equations (20a), (20b) for $v$. (75) or (76) can, in particular, be employed where $\tan\delta_{ex}$ is rather large, e.g., where $\delta_{app}>\delta_{thr}$, whereas (63) is used for smaller $\delta_{app}$. But it is also possible to use the said formulae over the whole range, i.e., with $\tan\delta_{cal}$.

$h_{im}$, on the other hand, can also be derived from $v_{im}$ - whether calculated according to (63) or according to (75) or (76) - and $\tan\delta_{ex}$ using (22), i.e.,

$$(77) \qquad h_{im} = \frac{v_{im}\tan\delta_{ex}}{l},$$

which, if $v_{im}$ is calculated using (75) or (76), corresponds to

$$(78) \qquad h_{im} = \pm \frac{1}{2l}\sqrt{V_{+}\frac{P}{a}\tan\delta_{ex}} = \pm \frac{1}{\sqrt{2bl}}\sqrt{V_{+}\frac{p}{1+p^2}\tan\delta_{ex}}$$

or, equivalently, to

$$(79) \qquad h_{im} = \pm \frac{1}{2\sqrt{bl}}\sqrt{V_{-}\tan\delta_{ex}} = \pm \frac{1}{2\sqrt{bl}}\sqrt{(v_l+v_r)(v_l-v_r)\tan\delta_{ex}}$$

which is equivalent to $h$ as calculated according to (44), i.e., the exact solution resulting from equations (20a), (20b). Here again, (77) can be used only where $\delta_{app}>\delta_{thr}$ or over the whole range, with $\tan\delta_{cal}$.

Use of the intermediate values $v_{im}$ and $h_{im}$ as calculated according to the simple formulae (63) and (64) has been found to be adequate in most cases even where the calculation wheel angle $\delta_{cal}$ varies over an interval of [-35°, +35°] or more.

If sufficient processing capacity is available, it is also possible to use formulae (52) and (61) in order to calculate

$\delta_{ex}$ directly from $\delta_{app}$ or formulae (66) and (60) to calculate $\tan\delta_{ex}$ directly from $\tan\delta_{app}$ instead of using a look-up table or even to use formulae (41) and (44) which yield, together with (23), (24) and (30), a velocity $v$ and heading rate $h$ which are exact solutions of equations (20a) and (20b), corresponding to solutions where $\delta_{ex}$ is used for the wheel angle and (75) or (76) and (77) for $v$ and $h$, respectively.

In the Kalman filter correction step which follows the prediction step to finalise the filter cycle, apart from GNSS observation equations, observation equations expressing the raw wheel velocities $T_l$, $T_r$ as functions of the states $v$, $h$, $f_l$ and $f_r$ are used where $\delta_{cal}$ figures as a parameter. E.g., equations

$$(80a) \quad T_l = \frac{1}{f_l}\left(\frac{v}{\cos\delta_{cal}} + bh\cos\delta_{cal}\right)$$

$$(80b) \quad T_r = \frac{1}{f_r}\left(\frac{v}{\cos\delta_{cal}} - bh\cos\delta_{cal}\right)$$

are employed which correspond to (55a), (55b) with $v_l$, $v_r$ expressed according to (4a), (4b), respectively, and $\delta_{app}$ replaced by $\delta_{cal}$. $T_l$ and $T_r$ are treated as observations and $f_l$, $f_r$, $v$ and $h$ as unknowns.

**List of reference symbols**

| 1 | frame |
|---|---|
| 2a,b | rear wheels |
| 3a,b | front wheels |
| 4 | tracking device |
| 5a,b | wheel tick units |
| 6 | GNSS antenna |

**Claims**

1. A method for tracking the position ($\underline{x}_{ref}$) and the heading ($H$) of a vehicle, at least intermittently using dead reckoning tracking based on velocities of the front wheels (3a, 3b), comprising

    - measuring parameters indicative of the velocity $v_l$ of the left front wheel (3a) and parameters indicative of the velocity $v_r$ of the right front wheel (3b),
    - deriving values for the velocity $v_l$ of the left front wheel (3a) and of the velocity $v_r$ of the right front wheel (3b) from the said parameters,
    - calculating a function of a calculation wheel angle $\delta_{cal}$ from the velocity $v_l$ of the left front wheel (3a) and the velocity $v_r$ of the right front wheel (3b), the calculation wheel angle varying over a wheel angle interval,
    - calculating a velocity $v$ and a heading rate $h$ of the vehicle, using the said function of the calculation wheel angle $\delta_{cal}$,
    - calculating values of the position ($\underline{x}_{ref}$) and the heading ($H$) of the vehicle based on a previous position and heading of the same, using the calculated velocity $v$ and heading rate $h$ of the vehicle,

    **characterised in that** the calculation wheel angle $\delta_{cal}$ reflected in the function of the calculation wheel angle $\delta_{cal}$ used for calculating the heading rate $h$ deviates, at least in a portion of the wheel angle interval, from an exact wheel angle $\delta_{ex}$ calculated according to

$$\delta_{ex} = \arctan\left(\frac{\dfrac{2p}{a}}{1+p^2+\sqrt{\left(1-p^2\right)^2-\left(\dfrac{2p}{a}\right)^2}}\right)$$

by less than an amount by which an approximate wheel angle defined as

$$\delta_{app} = \tfrac{1}{2}\arcsin\frac{2p}{a}$$

deviates from the exact wheel angle $\delta_{ex}$, where $a$ is one half of the front track gauge divided by the wheel base and

$$p = \frac{v_l - v_r}{v_l + v_r}\ .$$

2. The method according to claim 1, **characterised in that** in the whole of the wheel angle interval the extent of the deviation of the calculation wheel angle $\delta_{cal}$ from the exact wheel angle $\delta_{ex}$ is smaller than 2° and preferably smaller than 1°.

3. The method according to claim 1 or 2, **characterised in that** a function of the approximate wheel angle $\delta_{app}$ is calculated and, if the approximate wheel angle $\delta_{app}$ is smaller than a threshold wheel angle ($\delta_{thr}$), the function of the wheel angle used in the calculation of the heading rate $h$ reflects that the calculation wheel angle $\delta_{cal}$ equals the approximate wheel angle $\delta_{app}$ whereas, if the approximate wheel angle $\delta_{app}$ is greater than the threshold wheel angle ($\delta_{thr}$), the said function reflects that the calculation wheel angle $\delta_{cal}$ differs from the approximate wheel angle $\delta_{app}$ and is determined from the function of the latter.

4. The method according to claim 3, **characterised in that** for the determination of the function of the calculation wheel angle $\delta_{cal}$ from the function of the approximate wheel angle $\delta_{app}$ a look-up table is used where pairs consisting of the value of the function of the exact wheel angle $\delta_{ex}$ and the function of the corresponding value of the approximate wheel angle $\delta_{app}$ are stored.

5. The method according to claim 4, **characterised in that** interpolation, preferably linear interpolation, is used where the value of the function of the approximate wheel angle $\delta_{app}$ falls between two values of the same stored in the look-up table.

6. The method according to one of claims 1 to 5, **characterised in that** the velocity $v$ of the vehicle is calculated as

$$v = \frac{v_l + v_r}{2}\ \cos\delta_{cal}\ .$$

7. The method according to one of claims 1 to 5, **characterised in that** the velocity $v$ of the vehicle is calculated as

$$v = \frac{1}{2\sqrt{a}}\sqrt{\frac{v_l^2 - v_r^2}{\tan\delta_{cal}}}\ .$$

8. The method according to one of claims 1 to 7, **characterised in that** the heading rate $h$ of the vehicle is calculated as

$$h = \frac{v \tan \delta_{cal}}{l}$$

where $l$ is the wheel base.

9. The method according to one of claims 1 to 7, **characterised in that** the heading rate $h$ of the vehicle is calculated as

$$h = \frac{v_l - v_r}{2b \cos \delta_{cal}}$$

where $b$ is one half of the front track gauge.

10. The method according to one of claims 1 to 9, **characterised in that** the calculation wheel angle $\delta_{cal}$ varies over a range comprising the interval [-35°, 35°] .

11. The method according to one of claims 1 to 10, **characterised in that** it is made up of consecutive filter cycles, where each filter cycle comprises a prediction step consisting of at least one time update step where in each case the values of the position ($\underline{x}_{ref}$) and the heading ($H$) of the vehicle are calculated from the velocity v and the heading rate $h$, each calculation being based on a previously established value of the position ($\underline{x}_{ref}$) and the heading ($H$), and, if GNSS measurements are available, a correction step where the values of the position ($\underline{x}_{ref}$) and the heading ($H$) calculated in the prediction step are corrected with the GNSS measurements being taken into account.

12. The method according to claim 11, **characterised in that** every prediction step comprises a fixed number ($N$) of consecutive time update steps.

13. The method according to claim 11 or 12, **characterised in that** at each correction step wheel calibration factors ($f_l$, $f_r$) which are used to determine the velocity $v_l$ of the left front wheel (3a) and the velocity $v_r$ of the right front wheel (3b) from raw wheel velocities ($T_l$, $T_r$) which are based on measured wheel tick numbers are recalibrated.

14. A tracking device (4) usable in a vehicle for carrying out the method according to one of claims 1 to 13, **characterised in that** it has input lines for receiving data from wheel tick units (5a, 5b) and output lines for providing at least a reference position ($\underline{x}_{ref}$) as well as processing and data storage means and is configured to

    - receive sensor measurements indicative of the velocity $v_l$ of the left front wheel (3a) and sensor measurements indicative of the velocity $v_r$ of the right front wheel (3b),
    - derive values for the velocity $v_l$ of the left front wheel (3a) and of the velocity $v_r$ of the right front wheel (3b) from the said sensor measurements,
    - calculate a function of a calculation wheel angle $\delta_{cal}$ from the velocity $v_l$ of the left front wheel (3a) and the velocity $v_r$ of the right front wheel (3b), the calculation wheel angle $\delta_{cal}$ varying over a wheel angle interval,
    - calculate a velocity $v$ and a heading rate $h$ of the vehicle, using the said function of the calculation wheel angle $\delta_{cal}$,
    - calculate values of the position ($\underline{x}_{ref}$) and the heading ($H$) of the vehicle based on a previous position and heading of the same, using the calculated velocity $v$ and heading rate $h$ of the vehicle,

where the calculation wheel angle $\delta_{cal}$ reflected in the function of the calculation wheel angle $\delta_{cal}$ used for calculating the heading rate $h$ deviates, at least in a portion of the wheel angle interval, from an exact wheel angle $\delta_{ex}$ calculated according to

$$\delta_{ex} = \arctan\left(\frac{\dfrac{2p}{a}}{1+p^2+\sqrt{\left(1-p^2\right)^2-\left(\dfrac{2p}{a}\right)^2}}\right)$$

by less than an amount by which an approximate wheel angle defined as

$$\delta_{app} = \tfrac{1}{2}\arcsin\frac{2p}{a}$$

deviates from the exact wheel angle $\delta_{ex}$, where $a$ is one half of the front track gauge divided by the wheel base and

$$p = \frac{v_l - v_r}{v_l + v_r}\;.$$

15. The tracking device (4) according to claim 14, **characterised in that** in the whole of the wheel angle interval the extent of the deviation of the calculation wheel angle $\delta_{cal}$ from the exact wheel angle $\delta_{ex}$ is smaller than 2° and preferably smaller than 1°.

16. The tracking device (4) according to claim 14 or 15, **characterised in that** it is configured to calculate a function of the approximate wheel angle $\delta_{app}$ and, if the approximate wheel angle $\delta_{app}$ is smaller than a threshold wheel angle ($\delta_{thr}$), to use the function of the wheel angle in the calculation of the heading rate $h$ which reflects that the calculation wheel angle $\delta_{cal}$ equals the approximate wheel angle $\delta_{app}$ whereas, if the approximate wheel angle $\delta_{app}$ is greater than the threshold wheel angle ($\delta_{thr}$), the said function reflects that the calculation wheel angle $\delta_{cal}$ differs from the approximate wheel angle $\delta_{app}$ and is determined from the function of the latter.

17. The tracking device (4) according to claim 16, **characterised in that** it is configured to use, for the determination of the function of the calculation wheel angle $\delta_{cal}$ from the function of the approximate wheel angle $\delta_{app}$, a look-up table where pairs consisting of the value of the function of the exact wheel angle $\delta_{ex}$ and the function of the corresponding value of the approximate wheel angle $\delta_{app}$ are stored.

18. The tracking device (4) according to claim 17, **characterised in that** it is configured to use interpolation, preferably linear interpolation, where the value of the function of the approximate wheel angle $\delta_{app}$ falls between two values of the same stored in the look-up table.

19. The tracking device according to one of claims 14 to 18, **characterised in that** it has at least one further input line for receiving a signal from a GNSS antenna (6), the device being configured to carry out consecutive filter cycles, where each filter cycle comprises a prediction step consisting of at least one time update step where in each case the values of the position ($\underline{x}_{ref}$) and the heading ($H$) of the vehicle are calculated from the velocity $v$ and the heading rate $h$, each calculation being based on a previously established value of the position ($\underline{x}_{ref}$) and the heading ($H$), and, if GNSS measurements can be derived from the signal received from the GNSS antenna (6), a correction step where the values of the position ($\underline{x}_{ref}$) and the heading ($H$) calculated in the prediction step are corrected with the GNSS measurements being taken into account.

**Patentansprüche**

1. Verfahren zum Verfolgen der Position ($\underline{x}_{ref}$) und des Kurses ($H$) eines Fahrzeugs, wobei wenigstens zeitweise Koppelnavigations-Verfolgung auf der Grundlage von Geschwindigkeiten der Vorderräder (3a, 3b) eingesetzt wird, umfassend

- Messen von Parametern, welche die Geschwindigkeit $v_l$ des linken Vorderrades (3a) anzeigen und Messen von Parametern, welche die Geschwindigkeit $v_r$ des rechten Vorderrades (3b) anzeigen,
- Ableiten von Werten für die Geschwindigkeit $v_l$ des linken Vorderrades (3a) und der Geschwindigkeit $v_r$ des rechten Vorderrades (3b) von den besagten Parametern,
- Berechnen einer Funktion eines Berechnungslenkwinkels $\delta_{cal}$ aus der Geschwindigkeit $v_l$ des linken Vorderrades (3a) und der Geschwindigkeit $v_r$ des rechten Vorderrades (3b), wobei der Berechnungslenkwinkel über ein Lenkwinkelintervall variiert,
- Berechnen einer Geschwindigkeit $v$ und einer Kursänderungsrate $h$ des Fahrzeugs, wobei die besagte Funktion des Berechnungslenkwinkels $\delta_{cal}$ benutzt wird,
- Berechnen von Werten der Position ($\underline{x}_{ref}$) und des Kurses ($H$) des Fahrzeugs auf der Grundlage einer früheren Position und eines früheren Kurses desselben, wobei die Geschwindigkeit $v$ und die Kursänderungsrate $h$ des Fahrzeugs benutzt werden,

**dadurch gekennzeichnet, dass** der Berechnungslenkwinkel $\delta_{cal}$, wie er in der für die Berechnung der Kursänderungsrate $h$ benutzten Funktion eingesetzt wird, wenigstens in einem Teil des Lenkwinkelintervalls um einen geringeren Betrag von einem gemäss

$$\delta_{ex} = \arctan\left( \frac{\dfrac{2p}{a}}{1 + p^2 + \sqrt{\left(1 - p^2\right)^2 - \left(\dfrac{2p}{a}\right)^2}} \right)$$

berechneten exakten Lenkwinkel $\delta_{ex}$ abweicht als ein durch

$$\delta_{app} = \tfrac{1}{2} \arcsin \frac{2p}{a}$$

definierter approximativer Lenkwinkel vom exakten Lenkwinkel $\delta_{ex}$ abweicht, wo $a$ die vordere Spurbreite geteilt durch den Radstand bedeutet und $p = \dfrac{v_l - v_r}{v_l + v_r}$ ist.

2. Verfahren nach Anspruch 1, **dadurch gekennzeichnet, dass** im ganzen Lenkwinkelintervall die Abweichung des Berechnungslenkwinkels $\delta_{cal}$ vom exakten Lenkwinkel $\delta_{ex}$ kleiner als 2° und vorzugsweise kleiner als 1° ist.

3. Verfahren nach Anspruch 1 oder 2, **dadurch gekennzeichnet, dass** eine Funktion des approximativen Lenkwinkels $\delta_{app}$ berechnet wird und, wenn der approximative Lenkwinkel $\delta_{app}$ kleiner ist als ein Schwellenlenkwinkel ($\delta_{thr}$), bei der Berechnung der Kursänderungsrate $h$ die Funktion des Lenkwinkels eingesetzt wird, die der Annahme entspricht, dass der Berechnungslenkwinkel $\delta_{cal}$ dem approximativen Lenkwinkel $\delta_{app}$ gleich ist, während, wenn der approximative Lenkwinkel $\delta_{app}$ grösser ist als der Schwellenlenkwinkel ($\delta_{thr}$), die besagte Funktion der Annahme entspricht, dass der Berechnungslenkwinkel $\delta_{cal}$ vom approximativen Lenkwinkel $\delta_{app}$ verschieden ist und sie aus der Funktion des letzteren bestimmt wird.

4. Verfahren nach Anspruch 3, **dadurch gekennzeichnet, dass** für die Bestimmung der Funktion des Berechnungslenkwinkels $\delta_{cal}$ aus der Funktion des approximativen Lenkwinkels $\delta_{app}$ eine Tabelle benutzt wird, in der Paare bestehend aus dem Wert der Funktion des exakten Lenkwinkels $\delta_{ex}$ und der Funktion des entsprechenden Werts des approximativen Lenkwinkels $\delta_{app}$ gespeichert sind.

5. Verfahren nach Anspruch 4, **dadurch gekennzeichnet, dass** Interpolation, vorzugsweise lineare Interpolation eingesetzt wird, wenn der Wert der Funktion des approximativen Lenkwinkels $\delta_{app}$ zwischen zwei in der Tabelle gespeicherte Werte derselben fällt.

6. Verfahren nach einem der Ansprüche 1 bis 5, **dadurch gekennzeichnet, dass** die Geschwindigkeit $v$ des Fahrzeugs als

$$v = \frac{v_l + v_r}{2}\ \cos\delta_{cal}$$

berechnet wird.

7. Verfahren nach einem der Ansprüche 1 bis 5, **dadurch gekennzeichnet, dass** die Geschwindigkeit $v$ des Fahrzeugs als

$$v = \frac{1}{2\sqrt{a}}\sqrt{\frac{v_l^2 - v_r^2}{\tan\delta_{cal}}}$$

berechnet wird.

8. Verfahren nach einem der Ansprüche 1 bis 7, **dadurch gekennzeichnet, dass** die Kursänderungsrate $h$ des Fahrzeugs als

$$h = \frac{v\tan\delta_{cal}}{l}$$

berechnet wird, wo $l$ der Radstand ist.

9. Verfahren nach einem der Ansprüche 1 bis 7, **dadurch gekennzeichnet, dass** die Kursänderungsrate des Fahrzeugs als

$$h = \frac{v_l - v_r}{2b\cos\delta_{cal}}$$

berechnet wird, wo $b$ die Hälfte der vorderen Spurbreite ist.

10. Verfahren nach einem der Ansprüche 1 bis 9, **dadurch gekennzeichnet, dass** der Berechnungslenkwinkel $\delta_{cal}$ über einen Bereich variiert, der das Intervall [-35,35] umfasst.

11. Verfahren nach einem der Ansprüche 1 bis 10, **dadurch gekennzeichnet, dass** es aus aufeinanderfolgenden Filterzyklen besteht, wo jeder Filterzyklus einen Voraussageschritt umfasst, der aus mindestens einer Zeitnachführung besteht, bei der jeweils die Werte der Position ($x_{ref}$) und des Kurses ($H$) aus der Geschwindigkeit $v$ und der Kursänderungsrate $h$ berechnet werden, wobei jede Berechnung auf einem vorher ermittelten Wert der Position ($x_{ref}$) und des Kurses ($H$) beruht und, wenn GNSS-Messungen zur Verfügung stehen, einen Korrekturschritt, bei dem die beim Voraussageschritt berechneten Werte der Position ($x_{ref}$) und des Kurses ($H$) unter Berücksichtigung der GNSS-Messungen korrigiert werden.

12. Verfahren nach Anspruch 11, **dadurch gekennzeichnet, dass** jeder Voraussageschritt eine feste Zahl ($N$) von aufeinanderfolgenden Zeitnachführungen umfasst.

13. Verfahren nach Anspruch 11 oder 12, **dadurch gekennzeichnet, dass** bei jedem Korrekturschritt Radkalibrierungsfaktoren ($f_l$, $f_r$), welche zur Bestimmung der Geschwindigkeit $v_l$ des linken Vorderrades (3a) und der Geschwindigkeit $v_r$ des rechten Vorderrades (3b) aus auf gemessenen Radimpulszahlen beruhenden rohen Radgeschwindigkeiten

($T_l$, $T_r$) herangezogen werden, neu kalibriert werden.

**14.** Routenverfolgungsgerät (4), welches in einem Fahrzeug zur Durchführung des Verfahrens nach einem der Ansprüche 1 bis 13 einsetzbar ist, **dadurch gekennzeichnet, dass** es Eingangsanschlüsse für den Empfang von Daten von Radimpulseinheiten (5a, 5b) und Ausgangsanschlüsse zur Bereitstellung mindestens einer Referenzposition ($\underline{x}_{ref}$) aufweist sowie Datenverarbeitungs- und Datenspeichermittel und dafür eingerichtet ist,

- die Geschwindigkeit $v_l$ des linken Vorderrades (3a) anzeigende Sensormessungen und die Geschwindigkeit $v_r$ des rechten Vorderrades (3b) anzeigende Sensormessungen zu empfangen,
- Werte für die Geschwindigkeit $v_l$ des linken Vorderrades (3a) und die Geschwindigkeit $v_r$ des rechten Vorderrades (3b) aus den besagten Sensormessungen abzuleiten,
- eine Funktion eines Berechnungslenkwinkels $\delta_{cal}$ aus der Geschwindigkeit $v_l$ des linken Vorderrades (3a) und der Geschwindigkeit $v_r$ des rechten Vorderrades (3b) zu berechnen, wobei der Berechnungslenkwinkel über ein Lenkwinkelintervall variiert,
- eine Geschwindigkeit $v$ und eine Kursänderungsrate $h$ des Fahrzeugs zu berechnen, wobei die besagte Funktion des Berechnungslenkwinkels $\delta_{cal}$ benutzt wird,
- Werte der Position ($\underline{x}_{ref}$) und des Kurses ($H$) des Fahrzeugs auf der Grundlage einer früheren Position und eines früheren Kurses desselben zu berechnen, wobei die Geschwindigkeit $v$ und die Kursänderungsrate $h$ des Fahrzeugs benutzt werden,

wobei der Berechnungslenkwinkel $\delta_{cal}$, wie er in der für die Berechnung der Kursänderungsrate $h$ benutzten Funktion eingesetzt wird, wenigstens in einem Teil des Lenkwinkelintervalls um einen geringeren Betrag von einem gemäss

$$\delta_{ex} = \arctan\left( \frac{\dfrac{2p}{a}}{1 + p^2 + \sqrt{\left(1 - p^2\right)^2 - \left(\dfrac{2p}{a}\right)^2}} \right)$$

berechneten exakten Lenkwinkel $\delta_{ex}$ abweicht als ein durch

$$\delta_{app} = \tfrac{1}{2}\arcsin\frac{2p}{a}$$

definierter approximativer Lenkwinkel vom exakten Lenkwinkel $\delta_{ex}$ abweicht, wo $a$ die vordere Spurbreite geteilt durch den Radstand bedeutet und $p = \dfrac{v_l - v_r}{v_l + v_r}$ ist.

**15.** Routenverfolgungsgerät (4) nach Anspruch 14, **dadurch gekennzeichnet, dass** im ganzen Lenkwinkelintervall die Abweichung des Berechnungslenkwinkels $\delta_{cal}$ vom exakten Lenkwinkel $\delta_{ex}$ kleiner als 2° und vorzugsweise kleiner als 1° ist.

**16.** Routenverfolgungsgerät (4) nach Anspruch 14 oder 15, **dadurch gekennzeichnet, dass** es dafür eingerichtet ist, eine Funktion des approximativen Lenkwinkels $\delta_{app}$ zu berechnen und, wenn der approximative Lenkwinkel $\delta_{app}$ kleiner ist als ein Schwellenlenkwinkel ($\delta_{thr}$), bei der Berechnung der Kursänderungsrate $h$ die Funktion des Lenkwinkels einzusetzen, die der Annahme entspricht, dass der Berechnungslenkwinkel $\delta_{cal}$ dem approximativen Lenkwinkel $\delta_{app}$ gleich ist, während, wenn der approximative Lenkwinkel $\delta_{app}$ grösser ist als der Schwellenlenkwinkel ($\delta_{thr}$), die besagte Funktion der Annahme entspricht, dass der Berechnungslenkwinkel $\delta_{cal}$ vom approximativen Lenkwinkel $\delta_{app}$ verschieden ist und sie aus der Funktion des letzteren bestimmt wird.

**17.** Routenverfolgungsgerät (4) nach Anspruch 16, **dadurch gekennzeichnet, dass** es dafür eingerichtet ist, für die Bestimmung der Funktion des Berechnungslenkwinkels $\delta_{cal}$ aus der Funktion des approximativen Lenkwinkels $\delta_{app}$ eine Tabelle zu benutzen, in der Paare bestehend aus dem Wert der Funktion des exakten Lenkwinkels $\delta_{ex}$ und der Funktion des entsprechenden Werts des approximativen Lenkwinkels $\delta_{app}$ gespeichert sind.

18. Routenverfolgungsgerät (4) nach Anspruch 17, **dadurch gekennzeichnet, dass** es dafür eingerichtet ist, Interpolation, vorzugsweise lineare Interpolation einzusetzen, wenn der Wert der Funktion des approximativen Lenkwinkels $\delta_{app}$ zwischen zwei in der Tabelle gespeicherte Werte derselben fällt.

19. Routenverfolgungsgerät (4) nach einem der Ansprüche 14 bis 18, **dadurch gekennzeichnet, dass** es wenigstens einen weiteren Eingangsanschluss für den Empfang eines Signals von einer GNSS-Antenne aufweist und dafür eingerichtet ist, aufeinanderfolgende Filterzyklen auszuführen, wo jeder Filterzyklus einen Voraussageschritt umfasst, der aus mindestens einer Zeitnachführung besteht, bei der jeweils die Werte der Position ($\underline{x}_{ref}$) und des Kurses ($H$) aus der Geschwindigkeit v und der Kursänderungsrate $h$ berechnet werden, wobei jede Berechnung auf einem vorher ermittelten Wert der Position ($\underline{x}_{ref}$) und des Kurses ($H$) beruht und, wenn GNSS-Messungen zur Verfügung stehen, einen Korrekturschritt, bei dem die beim Voraussageschritt berechneten Werte der Position ($\underline{x}_{ref}$) und des Kurses ($H$) unter Berücksichtigung der GNSS-Messungen korrigiert werden.

**Revendications**

1. Procédé pour suivre la position ($\underline{x}_{ref}$) et le cap ($H$) d'un véhicule, au moins de manière intermittente en utilisant le suivi à l'estime sur la base des vitesses des roues avant (3a, 3b), comprenant

    - mesure de paramètres indiquant la vitesse $v_l$ de la roue avant gauche (3a) et de paramètres indiquant la vitesse $v_r$ de la roue avant droite (3b),
    - déduction de valeurs pour la vitesse $v_l$ de la roue avant gauche (3a) et la vitesse $v_r$ de la roue avant droite (3b) à partir desdits paramètres,
    - calcul d'une fonction d'un angle de roue de calcul $\delta_{cal}$ à partir de la vitesse $v_l$ de la roue avant gauche (3a) et de la vitesse $v_r$ de la roue avant droite (3b), l'angle de roue de calcul variant sur un intervalle d'angle de roue,
    - calcul d'une vitesse $v$ et d'une variation de cap $h$ du véhicule, en utilisant ladite fonction de l'angle de roue de calcul $\delta_{cal}$,
    - calcul de valeurs de la position ($\underline{x}_{ref}$) et du cap ($H$) du véhicule sur la base d'une position et d'un cap précédents de celui-ci, en utilisant la vitesse calculée $v$ et la variation de cap $h$ du véhicule,

**caractérisé en ce que** l'angle de roue de calcul $\delta_{cal}$ reflété dans la fonction de l'angle de roue de calcul $\delta_{cal}$ utilisée pour calculer la variation de cap $h$ s'écarte, au moins dans une partie de l'intervalle d'angle de roue, par rapport à un angle de roue exact $\delta_{ex}$ calculé selon

$$\delta_{ex} = \arctan\left( \frac{\dfrac{2p}{a}}{1 + p^2 + \sqrt{\left(1 - p^2\right)^2 - \left(\dfrac{2p}{a}\right)^2}} \right)$$

de moins d'une quantité par laquelle un angle de roue approximatif défini comme

$$\delta_{app} = \tfrac{1}{2} \arcsin\frac{2p}{a}$$

s'écarte de l'angle de roue exact $\delta_{ex}$, où $a$ est la moitié de la voie avant divisée par l'empattement et $p = \dfrac{v_l - v_r}{v_l + v_r}$ .

**2.** Procédé selon la revendication 1, **caractérisé en ce que**, sur l'ensemble de l'intervalle d'angle de roue, l'étendue de l'écart de l'angle de roue de calcul $\delta_{cal}$ par rapport à l'angle de roue exact $\delta_{ex}$ est inférieure à 2° et de préférence inférieure à 1°.

**3.** Procédé selon la revendication 1 ou 2, **caractérisé en ce qu'**une fonction de l'angle de roue approximatif $\delta_{app}$ est calculée et, si l'angle de roue approximatif $\delta_{app}$ est inférieur à un angle de roue de seuil ($\delta_{thr}$), la fonction de l'angle de roue utilisée dans le calcul de la variation de cap $h$ reflète que l'angle de roue de calcul $\delta_{cal}$ est égal à l'angle de roue approximatif $\delta_{app}$ tandis que, si l'angle de roue approximatif $\delta_{app}$ est supérieur à l'angle de roue de seuil ($\delta_{thr}$), ladite fonction reflète que l'angle de roue de calcul $\delta_{cal}$ diffère de l'angle de roue approximatif $\delta_{app}$ et il est déterminé à partir de la fonction de ce dernier.

**4.** Procédé selon la revendication 3, **caractérisé en ce que**, pour la détermination de la fonction de l'angle de roue de calcul $\delta_{cal}$ à partir de la fonction de l'angle de roue approximatif $\delta_{app}$, une table de consultation est utilisée où des paires constituées par la valeur de la fonction de l'angle de roue exact $\delta_{ex}$ et la fonction de la valeur correspondante de l'angle de roue approximatif $\delta_{app}$ sont stockées.

**5.** Procédé selon la revendication 4, **caractérisé en ce qu'**une interpolation, de préférence une interpolation linéaire, est utilisée lorsque la valeur de la fonction de l'angle de roue approximatif $\delta_{app}$ se situe entre deux valeurs de celle-ci stockées dans la table de consultation.

**6.** Procédé selon l'une des revendications 1 à 5, **caractérisé en ce que** la vitesse $v$ du véhicule est calculée en tant que

$$v = \frac{v_l + v_r}{2} \cos\delta_{cal}.$$

**7.** Procédé selon l'une des revendications 1 à 5, **caractérisé en ce que** la vitesse $v$ du véhicule est calculée en tant que

$$v = \frac{1}{2\sqrt{a}} \sqrt{\frac{v_l^2 - v_r^2}{\tan\delta_{cal}}} .$$

**8.** Procédé selon l'une des revendications 1 à 7, **caractérisé en ce que** la variation de cap $h$ est calculée en tant que

$$h = \frac{v\tan\delta_{cal}}{l}$$

où $l$ est l'empattement.

**9.** Procédé selon l'une des revendications 1 à 7, **caractérisé en ce que** la variation de cap $h$ du véhicule est calculée en tant que

$$h = \frac{v_l - v_r}{2b\cos\delta_{cal}}$$

où $b$ est égal à la moitié de la voie avant.

**10.** Procédé selon l'une des revendications 1 à 9, **caractérisé en ce que** l'angle de roue de calcul $\delta_{cal}$ varie dans une gamme comprenant l'intervalle [-35,35].

**11.** Procédé selon l'une des revendications 1 à 10, **caractérisé en ce qu'**il est constitué de cycles de filtrage successifs, où chaque cycle de filtrage comprend une étape de prédiction consistant en au moins une étape de mise à jour de temps où dans chaque cas les valeurs de la position ($x_{ref}$) et du cap (*H*) du véhicule sont calculées à partir de la vitesse *v* et de la variation de cap *h*, chaque calcul étant basé sur une valeur préalablement établie de la position ($x_{ref}$) et du cap (*H*), et, si des mesures GNSS sont disponibles, une étape de correction où les valeurs de la position ($x_{ref}$) et du cap (*H*) calculées dans l'étape de prédiction sont corrigées avec les mesures GNSS prises en compte.

**12.** Procédé selon la revendication 11, **caractérisé en ce que** chaque étape de prédiction comprend un nombre fixe (*N*) d'étapes de mise à jour de temps consécutives.

**13.** Procédé selon la revendication 11 ou 12, **caractérisé en ce que**, à chaque étape de correction, des facteurs d'étalonnage de roue ($f_l$, $f_r$), qui sont utilisés pour déterminer la vitesse $v_l$ de la roue avant gauche (3a) et la vitesse $v_r$ de la roue avant droite (3b) à partir de vitesses de roues brutes ($T_l$, $T_r$) qui sont basées sur les nombres de tics de roue mesurés, sont réétalonnés.

**14.** Dispositif de suivi (4) utilisable dans un véhicule pour mettre en oeuvre le procédé selon l'une des revendications 1 à 13, **caractérisé en ce qu'**il comporte des lignes d'entrée pour recevoir des données provenant d'unités de tics de roue (5a, 5b) et des lignes de sortie pour fournir au moins une position de référence ($x_{ref}$) ainsi que des moyens de stockage et de traitement des données, et est configuré pour

    - recevoir des mesures des capteurs indiquant la vitesse $v_l$ de la roue avant gauche (3a) et des mesures des capteurs indiquant la vitesse $v_r$ de la roue avant droite (3b),
    - déduire des valeurs pour la vitesse $v_l$ de la roue avant gauche (3a) et la vitesse $v_r$ de la roue avant droite (3b) à partir desdits mesures des capteurs,
    - calculer une fonction d'un angle de roue de calcul $\delta_{cal}$ à partir de la vitesse $v_l$ de la roue avant gauche (3a) et de la vitesse $v_r$ de la roue avant droite (3b), l'angle de roue de calcul $\delta_{cal}$ variant sur un intervalle d'angle de roue,
    - calculer une vitesse *v* et une variation de cap *h* du véhicule, en utilisant ladite fonction de l'angle de roue de calcul $\delta_{cal}$,
    - calculer valeurs de la position ($x_{ref}$) et du cap (*H*) du véhicule sur la base d'une position et d'un cap précédents de celui-ci, en utilisant la vitesse calculée *v* et la variation de cap *h* du véhicule,

où l'angle de roue de calcul $\delta_{cal}$ reflété dans la fonction de l'angle de roue de calcul $\delta_{cal}$ utilisée pour calculer la variation de cap *h* s'écarte, au moins dans une partie de l'intervalle d'angle de roue, par rapport à un angle de roue exact $\delta_{ex}$ calculé selon

$$\delta_{ex} = \arctan\left(\frac{\dfrac{2p}{a}}{1 + p^2 + \sqrt{\left(1 - p^2\right)^2 - \left(\dfrac{2p}{a}\right)^2}}\right)$$

de moins d'une quantité par laquelle un angle de roue approximatif défini comme

$$\delta_{app} = \tfrac{1}{2}\, \arcsin \frac{2p}{a}$$

s'écarte de l'angle de roue exact $\delta_{ex}$, où *a* est la moitié de la voie avant divisée par l'empattement et

$$p = \frac{v_l - v_r}{v_l + v_r}\ .$$

**15.** Dispositif de suivi (4) selon la revendication 14, **caractérisé en ce que**, sur l'ensemble de l'intervalle d'angle de roue, l'étendue de l'écart de l'angle de roue de calcul $\delta_{cal}$ par rapport à l'angle de roue exact $\delta_{ex}$ est inférieure à 2° et de préférence inférieure à 1°.

16. Dispositif de suivi (4) selon la revendication 14 ou 15, **caractérisé en ce qu'**il est configuré pour calculer une fonction de l'angle de roue approximatif $\delta_{app}$ et pour utiliser, si l'angle de roue approximatif $\delta_{app}$ est inférieur à un angle de roue de seuil ($\delta_{thr}$), la fonction de l'angle de roue dans le calcul de la variation de cap $h$, qui reflète que l'angle de roue de calcul $\delta_{cal}$ est égal à l'angle de roue approximatif $\delta_{app}$ tandis que, si l'angle de roue approximatif $\delta_{app}$ est supérieur à l'angle de roue de seuil ($\delta_{thr}$), ladite fonction reflète que l'angle de roue de calcul $\delta_{cal}$ diffère de l'angle de roue approximatif $\delta_{app}$ et il est déterminé à partir de la fonction de ce dernier.

17. Dispositif de suivi (4) selon la revendication 16, **caractérisé en ce qu'**il est configuré pour utiliser, pour la détermination de la fonction de l'angle de roue de calcul $\delta_{cal}$ à partir de la fonction de l'angle de roue approximatif $\delta_{app}$, une table de consultation où des paires constituées par la valeur de la fonction de l'angle de roue exact $\delta_{ex}$ et la fonction de la valeur correspondante de l'angle de roue approximatif $\delta_{app}$ sont stockées.

18. Dispositif de suivi (4) selon la revendication 17, **caractérisé en ce qu'**il est configuré pour utiliser une interpolation, de préférence une interpolation linéaire, lorsque la valeur de la fonction de l'angle de roue approximatif $\delta_{app}$ se situe entre deux valeurs de celle-ci stockées dans la table de consultation.

19. Dispositif de suivi selon l'une des revendications 14 à 18, **caractérisé en ce qu'**il comporte au moins une ligne d'entrée supplémentaire pour recevoir un signal provenant d'une antenne GNSS (6), le dispositif étant configuré pour effectuer des cycles de filtrage successifs, où chaque cycle de filtrage comprend une étape de prédiction consistant en au moins une étape de mise à jour de temps où dans chaque cas les valeurs de la position ($x_{ref}$) et du cap ($H$) du véhicule sont calculées à partir de la vitesse $v$ et de la variation de cap $h$, chaque calcul étant basé sur une valeur préalablement établie de la position ($x_{ref}$) et du cap ($H$), et, si des mesures GNSS peuvent être obtenues à partir du signal reçu à partir de l'antenne GNSS (6), une étape de correction où les valeurs de la position ($x_{ref}$) et du cap ($H$) calculées dans l'étape de prédiction sont corrigées avec les mesures GNSS prises en compte.

Fig. 1

determine
initial values
for $x_{ref,0}, H_0, f_l, f_r$

$k := 0$

sensor
measurements

time update step

$k := k+1$

$k=N$ ?

no

yes

GNSS
available?

no

$x_{ref,0} := x_{ref,N}$
$H_0 := H_N$

yes

GNSS
measurements

correct $x_{ref,N}, H_N$
recalibrate $f_l, f_r$

Fig. 2

Sensor
measurements
(wheel tick
numbers)

time update step

derive $T_l, T_r$

$$v_l := f_l T_l$$
$$v_r := f_r T_r$$

$$\delta_{app} := \frac{1}{2} \arcsin \frac{2b(v_l - v_r)}{l(v_l + v_r)}$$

$$|\delta_{app}| \leq \delta_{thr}?$$

yes

no

$$\delta_{cal} := \delta_{app}$$

$$\delta_{cal} := \delta_{ex}(\delta_{app})$$

$$v_{im} := \frac{v_l + v_r}{2} \cos \delta_{cal}$$

$$h_{im} := \frac{v_l - v_r}{2b \cos \delta_{cal}}$$

$$x_{ref,k+1}^{(n)} := x_{ref,k}^{(n)} + v_{im} \cos\left(H_k + \frac{h_{im}\Delta t}{2}\right)\Delta t$$

$$x_{ref,k+1}^{(e)} := x_{ref,k}^{(e)} + v_{im} \sin\left(H_k + \frac{h_{im}\Delta t}{2}\right)\Delta t$$

$$H_{k+1} := H_k + h_{im}\Delta t$$

Fig. 3

Fig. 4

EP 2 450 668 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **CH. HOLLENSTEIN ; E. FAVEY ; C. SCHMID ; A. SOMIESKI ; D. AMMANN.** Performance of a Low-cost Real-time Navigation System using Single-frequency GNSS Measurements Combined with Wheel-tick Data. *Proceedings of ION GNSS 2008 Meeting, Savannah,* September 2008